# EUROPEAN PATENT APPLICATION

(11) **EP 2 431 916 A2**
(43) Date of publication of application: **21.03.2012**
(21) Application number: 11179970.6
(22) Date of filing: 02.09.2011
(51) Int. Cl.: G06K 9/00

(54) **Transparent display device and method for providing object information**

(30) Priority: 16.09.2010 KR 20100091193
(71) Applicant: LG Electronics, Seoul, 150-721 (KR)
(72) Inventor: Park, Heeyeon, 135-240 SEOUL (KR); Joo, Yeonjoo, 151-890 SEOUL (KR); Park, Sunju, 135-270 SEOUL (KR)
(74) Representative: Cabinet Plasseraud

(57) **Abstract**

According to an embodiment of the present invention, a method for providing object information includes determining an eye direction of a person toward a first region of a transparent display, selecting at least one object seen via the transparent display in the determined eye direction, acquiring information on the selected object, and displaying the acquired information on the transparent display.

## Description

### CROSS REFERENCE TO RELATED APPLICATION

This application claims the benefit of the Korean Patent Application No. 10-2010-0091193, filed on September 16, 2010, which is hereby incorporated by reference as if fully set forth herein.

### BACKGROUND OF THE DISCLOSURE

### Field of the Disclosure

The present invention relates to a transparent display device and a method for providing object information, more particularly, to a transparent display device and a method which can provide information via a transparent display.

### Discussion of the Related Art

Electronic equipment including broadcasting receivers, personal computers, notebooks, mobile phones and the like may be configured to perform a variety of functions. Such a variety of functions may be a broadcasting receiving function, data and audio communication function, a motion picture taking function by using cameras, an audio storing function, a music file playing function via a speaker system, an image or video displaying function and the like. Some terminals may further have an additional game implementing function.

Moreover, as image technology and transparent electron device technology has been developing recently, transparent display panels enabling a rear object seen and images displayed simultaneously have been studied vibrantly and electron devices use the transparent display panels to display images and data as display panel. Such the transparent display may be an organic light emitting panel or plasma panel which uses self-emission.

### SUMMARY OF THE DISCLOSURE

Accordingly, the present invention is directed to a transparent display device and a method for providing object information.

An object of the present invention is to provide a transparent display device and a method for providing object information capable of providing information on a rear object seen via a transparent display.

Another object of the present invention is to provide a transparent display device and a method for providing object information capable of changing a location in which the object information is displayed on the transparent display according to a gesture of the user.

Additional advantages, objects, and features of the disclosure will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for providing object information comprising steps of: recognizing an eye direction of a person toward a transparent display; detecting an object seen via the transparent display in the recognized eye direction; acquiring information on the detected object; and displaying the acquired information on the transparent display. Here, the object may include at least one of a person, animal, thing, vehicle, building or natural object. The information on the object may include at least one of object title, object kind information, object history information, object appearance information, object weight information, location information of the object and detailed explanation of the object.

The method for providing the object information may further include steps of: identifying whether the eye direction is changed; and detecting an object seen via the transparent display in the changed eye direction.

The eye direction identifying step may include steps of: detecting a face area from images imaged by a photographing device; and recognizing the eye direction using the detected face area.

The acquiring step may include a step of searching the information on the object from data stored in a storage. The acquiring step may include steps of: transmitting to a server a request for searching the information on the object; and receiving a search result from the server. Here, when the information on the object is not stored in the storage, the request for searching the information on the object may be transmitted to the server.

At least one of an image or location information of the detected image may be transmitted, in the search requesting step.

The acquired information may be displayed near an area occupied by the object on the transparent display, in the displaying step. The displayed information may be moved according to the location in which the information is displayed and a recognized gesture.

In another aspect of the present invention, a transparent display device may include a transparent display configured to allow a shape of an object to be transmissive; and a controller configured to recognize an eye direction of a person toward the transparent display, to detect an object seen via the transparent display in the recognized eye direction and to acquire information on the detected object, wherein the transparent display displays the acquired information. Here, the object may include at least one of a person, animal, thing, vehicle, building or natural object. The information on the object may include at least one of object title, object kind information, object history information, object appearance information, object weight information, location information of the object and detailed explanation of the object.

The controller may identify whether the eye direction is changed and the controller may detect an object seen via the transparent display in the changed eye direction.

The controller may detect a face area from an image imaged by a photographing device and the controller may recognize the eye direction using the detected face area.

The controller may search information on the object from data stored in a storage medium. The controller may transmit to a server a search requesting signal for requesting search of the information on the object and the controller may control receiving of search result from the server. Here, when the information on the object is not found in the storage, the search requesting signal may be transmitted. The search requesting signal may include at least one of an image or location information of the detected object.

The transparent display device may display the acquired information near an area occupied by the object on the transparent display. Here, the displayed information may be moved according to the location in which the information is displayed and a recognized gesture.

According to the present invention and the method for providing the object information, the eye direction of the person is recognized and the information on the object seen via the transparent display in the recognized eye direction is provided. As a result, a user may view the information on the object in rear of the transparent display, together with the shape of the object, without auxiliary searching request for the information on the object. In addition, the gesture of the user is recognized and the area having the information displayed thereon is moved according to the recognized gesture. As a result, the user can make a gesture to move the information on the object or to delete it from a screen, even while viewing the object and the information on the object, without auxiliary changing of his or her eye direction.

According to an embodiment of the present invention, a method for providing object information includes determining an eye direction of a person toward a first region of a transparent display, selecting at least one object seen via the transparent display in the determined eye direction, acquiring information on the selected object, and displaying the acquired information on the transparent display.

According to an embodiment of the present invention, a transparent display device includes a transparent display and a controller configured to determine an eye direction of a person toward a first region of the transparent display, to select at least one object seen via the transparent display in the determined eye direction, to acquire information on the selected object, and control the transparent display to display the acquired information.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure.

In the drawings:

FIG. 1 is a diagram illustrating a configuration of an object information providing system according to an exemplary embodiment of the present invention;

FIG. 2 is a diagram illustrating a situation in which information on an object detected by eye tracking is displayed;

FIG. 3 is a diagram illustrating a situation in which the displayed object information is changed according to the eye tracking;

FIG. 4 is a diagram illustrating a screen displaying the detected object information;

FIG. 5 is a block view illustrating a configuration of a transparent display device according to an exemplary embodiment of the present invention;

FIG. 6 is a block view illustrating a controller of the transparent display device;

FIG. 7 is a flowchart view illustrating process steps of a method for providing object information according to an exemplary embodiment of the present invention;

FIGS. 8a to 8e are diagrams illustrating a screen displaying detected object information and a recognized gesture;

FIG. 9 is a diagram illustrating a screen displaying a gesture configured to request displaying the detected object information;

FIG. 10 is a flowchart illustrating process steps of a method for recognizing an eye direction according to an exemplary embodiment of the present invention;

FIG. 11 is a flowchart illustrating process steps of a method for detecting an object according to an exemplary embodiment of the present invention;

FIG. 12 is a flowchart illustrating process steps of a method for acquiring object information according an exemplary embodiment of the present invention;

FIG. 13 is a flowchart illustrating process steps of a method for acquiring object information according to anther embodiment of the present invention;

FIG. 14 is a flowchart illustrating process steps of a method for providing object information according to another embodiment of the present invention; and

FIG. 15 is a block view illustrating a transparent display device according to another embodiment of the present invention.

### DESCRIPTION OF SPECIFIC EMBODIMENTS

Reference will now be made in detail to the specific embodiments of the present invention, examples of which are illustrated in the accompanying drawings. Wherever possible, the same reference numbers will be used throughout the drawings to refer to the same or like parts.

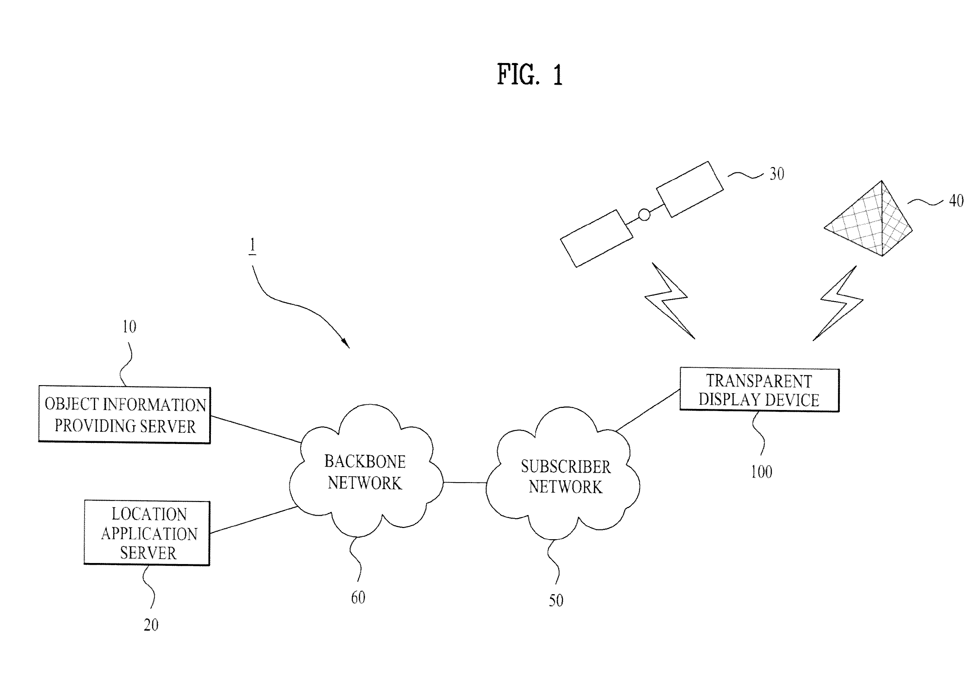

FIG. 1 is a diagram illustrating a configuration of an object information providing system according to an exemplary embodiment of the present invention.

In reference to FIG. 1, an object information providing system 1 according to the embodiment of the present invention includes an object information providing server 10, a location application server 20, a network 50 and 60 and a transparent display device 100.

The object information server 10 stores an object image, location information, information on an object, related information of the object image and the information on the object, and related information of the location information and the information on the object. Here, the object may include at least one of a human, an animal, a thing, a vehicle, a building or a natural object. The information on the object may include at least one of an object title, object kind information, object history information, object appearance information, object weight information, location information of the object or detailed explanation of the object. Here, the information on the object will be referenced to as 'object information' and the object image is an image including a shape of the object.

The related information is information configured to map information onto information. For example, the related information may be a single table name in a relation database system. The object information providing server 10 may search object information mapped on a specific object image via the related information and it may search object information mapped onto the location information via the related information.

The object information providing server 10 may receive a search requesting signal from the transparent display device 100. Here, the search requesting signal may include at least one of an image of the detected object or location information. The image of the detected object may be a picture imaged by the transparent display device 100 or an object image extracted from the imaged picture.

When the search requesting signal including the image of the detected object is received from the transparent display device 100, the object information providing server 10 may recognize a corresponding object from the received image and it may search information on the recognized object. The object information providing server 10 may transmit detected information on the object to the transparent display device 100. Here, the object information providing server 10 compares the received image with a stored object image, to recognize the object. In other words, the object information providing server 10 finds an object image which is identical to or the most similar to the object image included in the received images and it searches information on the recognized object based on the found object image and the stored related-information.

When receiving a search requesting signal including location information on the detected object from the transparent display device 100, the object information providing server 10 recognizes an object mapped onto the received location information and it searches information on the recognized object. The object information providing server 10 may transmit the searched information on the detected object to the transparent display device 100. Here, the object information providing server 10 may search information on the recognized object based on the received location information and the stored related-information.

When receiving a search requesting signal including the image of the detected object and location information thereon from the transparent display device 100, the object information providing server 10 recognizes a corresponding object based on the received image and location information of the object and it searches information on the recognized object. The object information providing server 10 may transmit the searched information of the object to the transparent display device 100. Here, the object information providing server 10 may detect object information, corresponding to object information mapped onto the received location information, out of the information on the object mapped onto the object image included in the received image as information on the recognized object.

The location application server 20 may provides the transparent display device 100 with a location based service (LBS). The location application server 20 may provide the transparent display device 100 with the location information on a specific object and a map and geographic information of a specific location.

The object information providing server 10, the location application server 20 and the transparent display device 100 may be connected with a network. Here, the network may be an internet or intranet and a broadband convergence network (BCN) or Ultra broadband convergence network.

The network may be configured of a backbone network 60 and a subscriber network 50. The backbone network 60 may be one or combination of at least two of X.25 network, Frame Relay network, ATM network, Multi Protocol Label Switching (MPLS) network or Generalized Multi Protocol Label Switching network. The subscriber network 50 may be one of Fiber to The Home (FTTH), Asymmetric Digital Subscriber Line (ADSL), Cable network, Wireless LAN (IEEE 802.11B, IEEE 802.11A, IEEE 802.11G and IEEE 802.11N), Wreless Broadband (WIBro), Wimax or High Speed Downlink Packet Access (HSDPA). The transparent display device 100 may be connected with the subscriber network 50.

The transparent display device 100 recognizes an eye direction of a human toward itself and it detects an object visible via the transparent display in the recognized eye direction. Also, the transparent display device 100 displays information on the detected object.

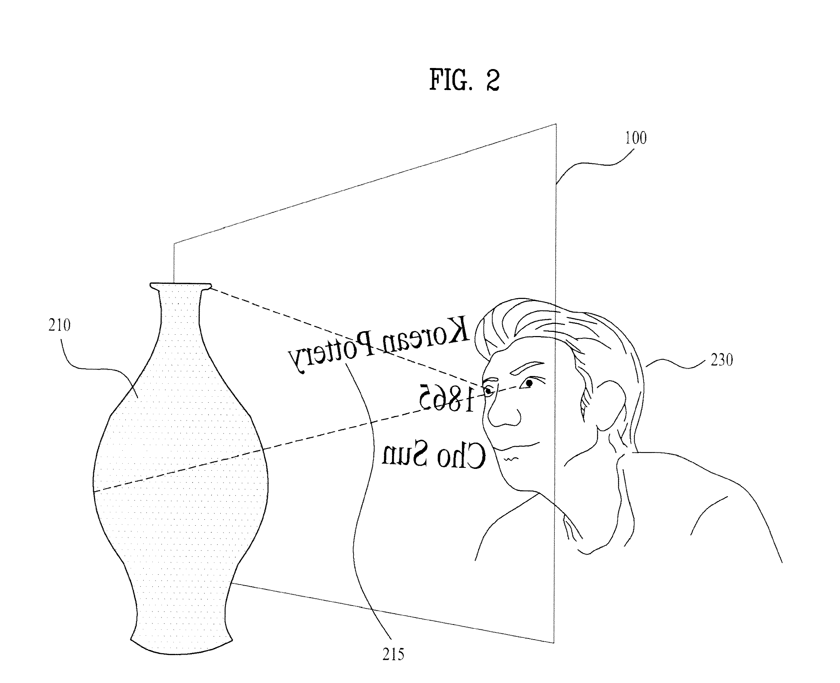

FIG. 2 is a diagram illustrating a situation in which the information on the object detected according to eye tracking is displayed.

In reference to FIG. 2, if a human 230 is seeing an object visible via the transparent display, the transparent display device 100 recognizes an eye direction of the human 230 and detects the object 210 seen via the transparent display in the recognized eye direction. The transparent display device 100 may display information 215 on the detected object on the transparent display.

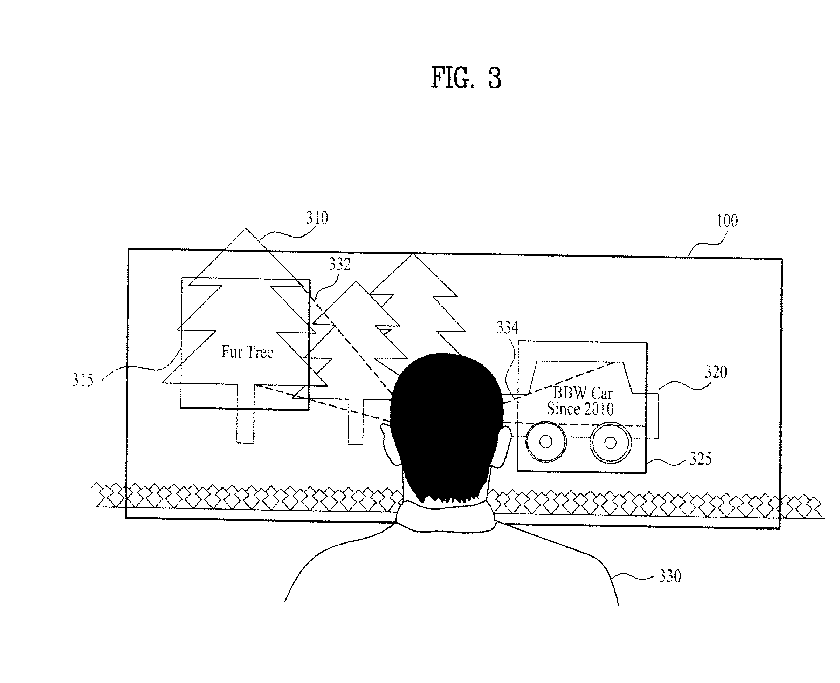

FIG. 3 is a diagram illustrating a situation in which the displayed information on the object is changed according to eye movement.

In reference to FIG. 3, when a human 330 is seeing an object 310 visible via a transparent display, the transparent display device 100 recognizes an eye direction 332 of the human 330 and detects the object 310 seen via the transparent display, displays information 315 on the detected object 310 on the transparent display.

If the eye direction of the human 330 is changed from the eye direction 332 to another eye direction 334, the transparent display device 100 recognizes the changed eye direction 334 and detects an object 320 seen via the transparent display, displays information 325 on the detected object 320.

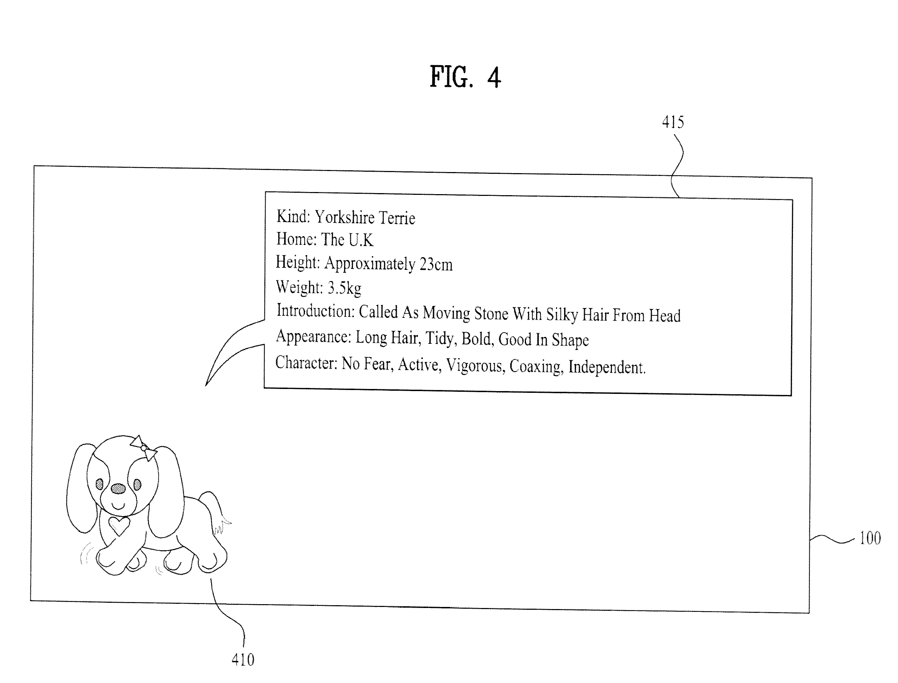

FIG. 4 is a diagram illustrating a screen displaying the information on the detected object.

In reference to FIG. 4, if detecting an animal 410, the transparent display device 100 may display information 415 on the detected animal 410. the transparent display device 100 displays 'Yorkshire Terrier' as object kind information, the United Kingdom as object history information, Approximately 23cm as object appearance information, 3.5kg as object weight information and introduction information, appearance information and characteristic information as detailed explanation of the object.

The transparent display device 100 may search and acquire the information on the detected object directly from a storage device, or may request search to the object information providing server 10 to acquire the information on the detected object.

The transparent display device 100 may transmit a search requesting signal to the object information providing server 10 to request search about the detected object. The transmitted search requesting signal may include an image of the detected object or location information of the detected object. The image of the detected object may be an original image imaged by an imaging image or an image generated by the transparent display device 100 after extracting a region occupied by the object from the original image.

The transparent display device 100 may acquire the location information of the detected object from the location application server 20 and may compute the location information of the detected object from location information possessed thereby.

The transparent display device 100 may position its location via a radio wave received from a base station 40 based on network-based technology, for example, Cell ID, AOA and TDOA system and the like. In addition, the transparent display device 100 may position its location via a signal received from a satellite 30 based on Handset-based positioning technology, for example, TOA (Time Of Arrivals), GPS (Global Positioning System) and Hybrid positioning system and the like.

The location of the detected object may be positioned with respect to the transparent display device 100 by using image recognition-based technology. The transparent display device 100 may position the location of the object from pictures having the object which are taken by a plurality of photographing devices based on a supervised learning algorithm. Alternatively, the transparent display device 100 may position the location of the object by using Vision VR-based technology. If using the image recognition-based technology to position the location of the object, the transparent display device 100 may detect the location of the object with the accuracy within several centimeters and it may detect the location of the object more accurately.

The location of the detected object with respect to the transparent display device 100 may be positioned by using ultrasonic wave-based technology. The transparent display device 100 transmits an ultrasonic wave toward the recognized eye direction and may compute the distance of the detected object based on the transmitted ultrasonic wave. Also, the transparent display device 100 may determine an azimuth of the object based on the transmitted direction of the ultrasonic wave. The transparent display device 100 may position the location of the detected object based on the computed distance and the determined azimuth.

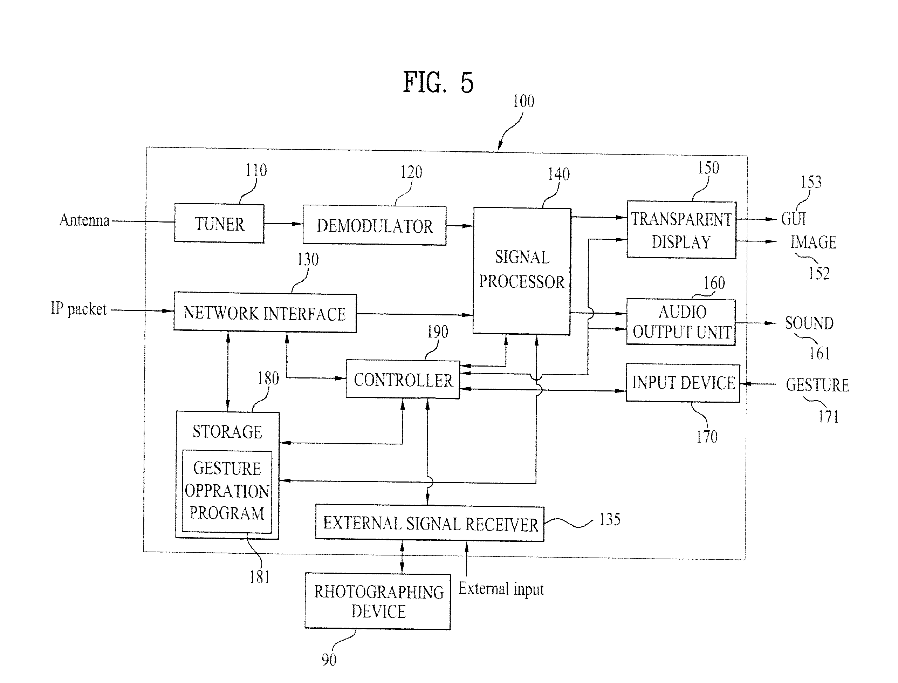

FIG. 5 is a block view illustrating a configuration of a transparent display device according to an exemplary embodiment of the present invention.

In reference to FIG. 5, the transparent display device 100 includes a tuber 110, a demodulator 120, a network interface 130, a signal processor 140, a transparent display 150, an audio output unit 160, an input device 170, a storage 180, a controller 190 and an external signal receiver 135. The transparent display device 100 may be a personal computer system of a desktop, laptop, tablet or handheld computer and the like. Alternatively, the transparent display device 100 may be a mobile terminal, for example, a mobile phone, smart phone, terminal for digital broadcasting, PDA (Personal Digital Assistants, PMP (Portable Multimedia Player), a navigation and the like, or it may be a fixed-type electric appliance, for example, a digital TV and the like.

The tuner 110 selects one corresponding to a channel selected by a user out of RF (Radio Frequency) broadcasting signals received via an antenna and it converts the selected RF broadcasting signal into a middle frequency signal or a baseband video or audio signal. For example, when the selected RF broadcasting signal is a digital broadcasting signal, the tune 110 converts the selected RF broadcasting signal into a digital IF signal (DIF). When it is an analog broadcasting signal, the tuner 110 converts the selected RF broadcasting signal into an analog baseband video or video signal (CVBS SIF). That is, the tuner 110 may process the digital broadcasting signal or analog broadcasting signal. The analog baseband video or audio signal (CVBS SIF) outputted from the tuner 110 may be inputted to the signal processor 140 directly.

In addition, the tuner 110 may be receive a RF broadcasting with a single carrier according to ATSC (Advanced Television System Committee) or a RF broadcasting signal with a plurality of carriers according to DVB (Digital Video Broadcasting).

A transparent display device 100 according to another embodiment of the present invention may include at least two tuners. When the at least two tuners are provided, a second tuner selects one of RF broadcasting signals received via the antenna, which is corresponding to a channel selected by the user, like a first tuner, and the second tuner converts the selected RF broadcasting signal into a middle frequency signal or baseband video or audio signal.

In addition, the second tuner sequentially selects RF broadcasting signals of the received RF signals, which are corresponding to all of the stored broadcasting channels via a channel memory function, and it converts them into the middle frequency signals or baseband video/audio signals. The second tuner may perform conversion of all of the broadcasting channels periodically. Because of that, the transparent display device 100 may provide images of broadcasting signals converted by the first tuner and it may provide a thumbnail type of images converted by the second tuner simultaneously. In this case, the first tuner converts a main RF broadcasting signal selected by the user into a middle frequency signal or baseband video/audio signal, and the second tuner sequentially and periodically selects the other RF broadcasting signals except the main RF broadcasting signal and it converts them into middle frequency signals or baseband video/audio signals.

The demodulator 120 receives a digital IF signal (DIF) converted by the tuner 110 and it performs demodulation of DIF. For example, when the digital IF signal outputted from the tuner 110 is an ATSC system, the demodulator 120 performs 8-VBS (8-Vestigial Side Band) demodulation. Alternatively, when the digital IF signal outputted from the tuner 110 is a DVB system, the demodulator 120 performs COFDMA (Coded Orthogonal Frequency Division Modulation) demodulation.

The demodulator 120 may perform channel decoding. For that, the demodulator 120 may include a trellis decoder, a de-interleaver and a reed Solomon decoder to perform trellis decoding, de-interleaving and reed Solomon decoding.

After performing the demodulation and channel decoding, the demodulator 120 may output a stream signal (TS). At this time, the stream signal may be a signal multiplexed of video, audio and data signals. For example, the stream signal may be MPEG-2 Ts (Transport Stream) multiplexed of MPEG-2 format video signal, dolby AC-3 format audio signal. Specifically, MPEG-2 Ts may include 4 byte header and 184 bite payload.

The stream signal outputted from the demodulator 120 may be inputted to the signal processor 140. After performing demultiplexing and signal processing, the signal processor 140 outputs an image to the transparent display 150 and it outputs a sound to the audio output unit 160.

In case of the digital broadcasting receiver having at least two tuners, the corresponding number of demodulators to the at least two tuners may be provided. The demodulators may be provided independently based on ATSC and DVB system.

The network interface 130 receives packets from the network and transmits the received packets to the network. That is, the network interface 130 receives IP packets configured to transport broadcasting data from the service providing server via the network. Here, the broadcasting data includes contents, an update message configured to notify contents updating, metadata, service information, software codes and A/V data. The service information may include service information on a real-time broadcasting service and service information on an internet service. Here, the internet service means a service provided via the internet, for example, a Cod (Content's on Demand) service, YouTube service, an information service for weather, news, community information and search, an entertainment service for a game and karaoke, and a communication service for TV mail and TV SMS (Short Message Service). As a result, the digital broadcasting receiver according to the present invention may include a network TV, web TV and broadband TV. Also, the broadcasting service may include an internet service as well as a broadcasting service provided via terrestrial, satellite and cable.

The controller 190 implements command and it performs an operation related to the transparent display device 100. For example, the controller 190 may control input and output and receiving and processing of data between components of the transparent display device 100, using a command searched in the storage 180. The controller 190 may be represented on a single chip, a plurality of chips or a plurality of electric parts. For example, a variety of architectures including an exclusive or embedded processor, a single purpose processor, controller, ASIC and the like may be useable with respect to the controller 190.

The controller 190 implements a computer code together with an operating system and it performs generation and usage of data. The operating system is well-known in the art to which the present invention pertains and description of the operating system will be omitted. For example, the operating system may be Window series OS, Uni, Linux, Palm OS, DOS, Android and Macintosh and the like. The operating system, another computer code and data may exist in the storage 180 connected with the controller 190.

Typically, the storage 180 provides storage for program codes and data used by the transparent display device 100. For example, the storage 180 may be represented to be a ROM (Read only Memory), RAM (Random Access Memory), hard-disc drive. The program codes and data may exist in a separable storage medium or they may be loaded or installed on the transparent display device 100. Here, the separable storage medium includes a CD-ROM, PC-CARD, memory card, floppy disc, magnetic tape and network component.

The transparent display 150 may put into operation, connected with the controller 190. The transparent display 150 may be represented to be an organic light emitting panel or plasma panel.

The transparent display 150 may display a graphic user interface (GUI) 153 configured to provide an easy interface usable between the user of the transparent display device and the operating system or a predetermined application implemented on the operating system. The GUI 153 represents a program, a file and operation options as graphic image. The graphic image may include a window, field, a dialog box, menu, icon, button, curser and scrollbar. Such images may be aligned in a layout defined in advance or they may be generated dynamically to help the user's specific handling. During the operation, the user may select and enable the image to start functions and works related to the variety of graphic images. For example, the user may select a button to implement opening, closing, minimizing and maximizing of a window or an icon to start a specific program.

The input device 170 may be a touch screen disposed on or in front of the transparent display 150. The touch screen may be integral with the transparent display 150 or an independent element. If it is formed integrally with the transparent display 150, the touch screen may be named as touch screen display. When the touch screen is disposed in front of the transparent display 150, the user may operate the GUI 153 directly. For example, the user may place only his or her finger on an object which will be controlled and there is no one-to-one relation on a touch pad.

The touch pad is placed on another plane, separated from the transparent display 150. For example, the transparent display 150 is typically located on a vertical plane and the touch pad is located in a horizontal plane. This allows usage of the touch pad less intuitive and it is quite difficult, compared with the touch screen. In addition to the touch screen, the input device 170 may be a multipoint input device.

The controller 190 may recognize a gesture 171 applied to the input device 170 and it may control the transparent display device 100 based on this gesture 171. Here, the gesture may be defined as predetermined interaction with the input device 170, which is mapped onto at least one specific computing operation. The gesture 171 may be generated by a variety of human fingers, specifically, motion of human fingers. Alternatively, the gesture may be generated by a stylus in addition to the motion of human fingers. Here, a thing for generating the gesture 171 such as human fingers, stylus may be referenced to as 'object'.

The input device receives the gesture 171 and the controller 190 implements commands configured to perform operations related to the gesture 171. Moreover, the storage 180 may include a gesture operation program 181 which may be a part of the operating system or auxiliary application. The gesture operation program 181 includes a series of commands to recognize generation of the gesture 171 and/or to instruct which step has to be taken in response to the gesture 171 to at least one software agent.

When the user generates one or more gestures, the input device 170 transports gesture information to the controller 190. Using a command transported from the storage 180, specifically, the gesture operation program 181, the controller 190 translates the gesture and it controls each component of the transparent display device 100 such as the storage 180, the transparent display 150, the audio output unit 160, the signal processor 140, the network interface 130 and the input device 170. The gesture 171 may be detected as command for performing operation of an application stored in the storage 180, for modifying the GUI object displayed on the transparent display 150, for modifying data stored in the storage 180 and for performing operation of the network interface 130 and the signal processor. For example, such commands may be related to zooming, panning, scrolling, page turning, rotating, size adjusting, image channel changing, content receiving and internet access. In addition, the commands may be related to starting of a specific program, opening of a file or document, menu viewing, selecting, command implementing, log-on an internet site system, allowing of an identified person to have access to a limited area of a computer system, loading of user profile related to user preference arrangement on a wall paper and/or the like.

A variety of difference gestures may be usable. For example, the gesture may be a single point or multipoint gesture, a static or dynamic gesture, a continuous or segmented gesture, and/or the like. The single point gesture is a gesture performed according to a single touch point. For example, this gesture is performed according to single touch such as a single human finger, palm or stylus. The multipoint gesture is a gesture performed according to multiple points. For example, this gesture is performed according to plural touches such as plural human fingers, human fingers and palm, human fingers and stylus, plural styli and/or combination of them. The static gesture is a gesture having no motion and the dynamic gesture is a gesture having motion. The continuous gesture is a gesture is a gesture performed according to a single stroke and the segmented gesture is a gesture performed according to an independent sequence of steps or strokes.

The object and the touch on the touch screen have a variety of different patterns, typically. For example, a single point gesture on the touch screen includes an object-down event and a following object-up event performed at an identical location or almost identical location of the object-down event. The dynamic gesture on the touch screen includes an object-down event and at least one object-dragging event following the object-down event and an object-up event following the at least one object-dragging event.

According to some embodiments, a parameter is used to describe a process in which a human finger approaches to the touch screen display to touch the touch screen display and to recede from the touch screen display. This parameter may be at least one function of the distance between the human finger and the touch screen display, the pressure of the human finger applied to the touch screen display, the touch area between the human finger and the touch screen, the voltage between the human finger and the touch screen, the capacitance between the human finger and the touch screen display and physical parameters.

According to some embodiments, when the size of the parameter between the human finger and the touch screen display (for example, the capacitance) is higher than a predetermined threshold value level, the object-down event is performed. While the parameter is the predetermined threshold value level or higher, with a curser position corresponding to the human finger moved from a position 'A' to a position 'B', the object-dragging event is performed. When the parameter is lower than the threshold value level, the object-up event is performed.

The controller 190 recognizes an eye direction of a person toward the transparent display via the picture received from the photographing device 90 and it detects an object seen via the transparent display in the recognized eye direction. After that, the controller 190 may control acquirement of object information on the detected object and it may control the transparent display 150 to display the acquired object information.

The external signal receiver 135 may provide an interface which can connect an external device with the transparent display device 100. Here, the external device may means DVD (Digital Versatile Disk), Bluray, a game unit, camcorder, a computer (notebook) and various kinds of video or audio output unit units. The transparent display device 100 may control video signals and audio signals received from the external signal receiver 135 to be display and it may store or use a data signal.

The external device may be the photographing device 90. The photographing device 90 may include a plurality of cameras and it may image a person. The photographing device 90 recognizes a face area of the person and it focuses the face area, to zoom-in, and it images the face area. Here, a human hand shape imaged by the photographing device 100 may be recognized as gesture. That is, the controller 190 may implements commands configured to perform operations related to the recognized hand shape.

The photographing device 90 may image a rear object of the transparent display 150. That is, the photographing device 90 may image the object seen via the transparent display 150 in the eye direction of the person according to a control signal of the transparent display device 100. The photographing device may recognize and focus on an object area, and it zooms in to image the object. The object may be imaged by the photographing device 90 in a plurality of difference positions.

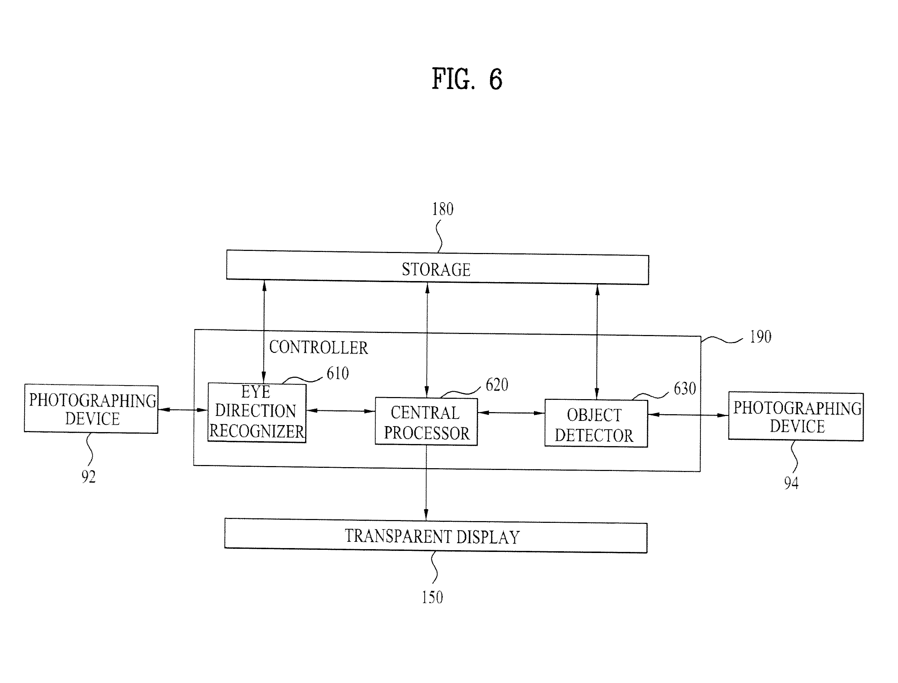

FIG. 6 is a block view illustrating a configuration of a controller according to an exemplary embodiment of the present invention, which composes the transparent display device.

In reference to FIG. 6, a controller 190 may include an eye direction recognizer 610, a central processer 620 and an object detector 630.

The eye direction recognizer 610 may detect a face area from an image frame photographed by a photographing device 92. The eye direction recognizer 610 detects an eye image from the detected face area and it may determine an eye direction by using the detected eye image.

According to an embodiment to determine the eye direction, the eye direction recognizer 610 computes a difference between each of stored eye images and the detected eye image, and it may select an eye image having the smallest difference with the detected eye image. The eye direction recognizer 610 may determine an eye direction indicated by eye direction information mapped onto the selected eye image to be an eye direction of the detected eye image.

The central processor 620 may detect a hand area from the image frame photographed by the photographing device 92. The central processor 620 compares each of stored hand shapes with the detected hand area, and it may select one of the stored hand shapes which is identical to a hand shape displayed in the detected hand area. The central processor 620 may implement a command capable of performing an operation related to the selected hand shape.

The object detector 630 controls motion of a focus of a photographing device 94 toward the object seen via the transparent display in the eye direction determined by the eye direction recognizer 610, and it controls imaging of the photographing device 94.

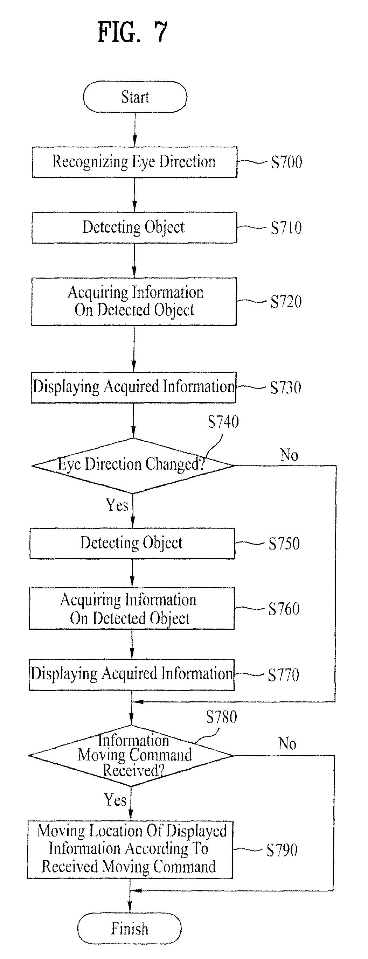

FIG. 7 is a flowchart illustrating process steps of a method for providing object information according to an exemplary embodiment of the present invention.

In reference to FIG. 7, the eye direction recognizer 610 recognizes an eye direction of a person toward the transparent display 150 (S700).

The object detector 630 detects an object seen via the transparent display 150 in the eye direction recognized by the eye direction recognizer 610 (S710). Here, the object may include at least one of a person, animal, thing, vehicle, building or natural object.

The central processor 620 controls acquirement of information on the detected object (S720). Here, the object information, which is the information on the object, may include at least one of an object title, object kind information, object history information, object appearance information, object weight information, location information of the object or detailed explanation of the object.

The transparent display 150 displays the acquired object information (S730). Here, the object information may be displayed together with the screen shown in FIGS. 2 and 4.

The central processor 620 identifies whether the eye direction of the person is changed (S740).

When the eye direction is changed according to the result of the identification, the object detector 630 detects an object seen via the transparent display 150 in the changed eye direction (S750).

The central processor 620 acquires object information of the object detected in the changed eye direction (S760).

The transparent display 150 displays the object information acquired by the central processor 620. Here, the acquired object information may be displayed together with the information 325 shown in FIG. 3.

The central processor 620 identifies whether an information moving command is received (S780). Here, the information moving command may be a command generated by a gesture recognized by a hand shape included in the image frame imaged by the photographing device 92, or it may be a command generated by a dynamic gesture recognized as the object-down event, the object-dragging event and the object-up event.

When the information moving command is received, the central processor 620 controls the position of information displayed on the transparent display 150 to move based on the received moving command (S790).

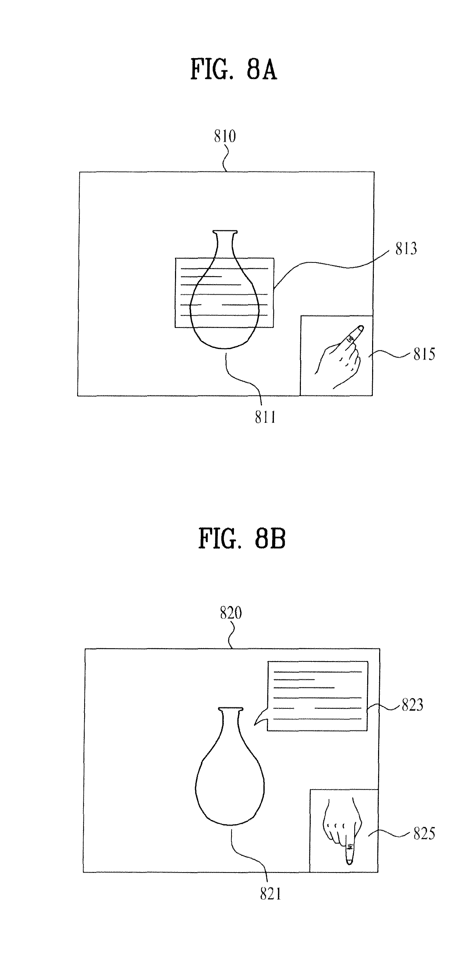

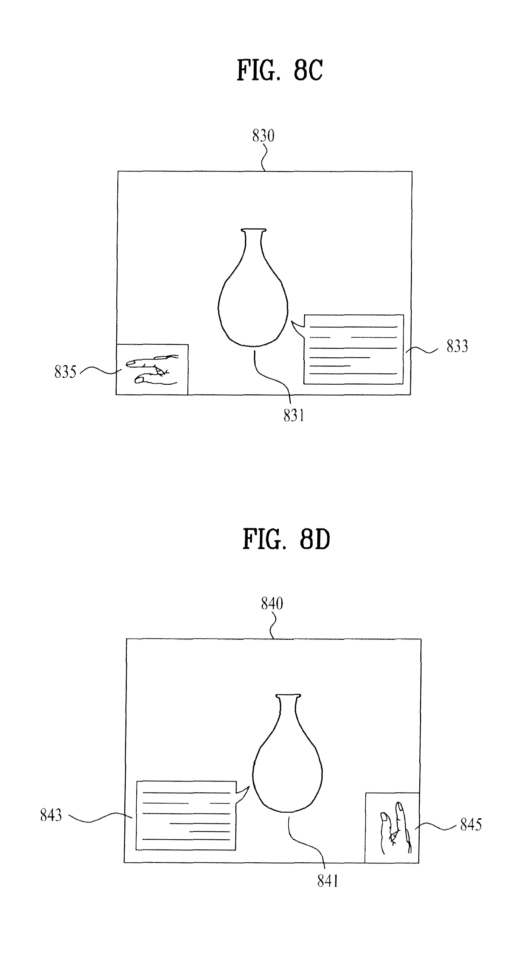

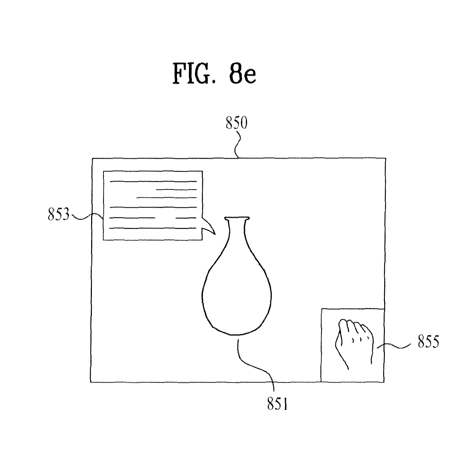

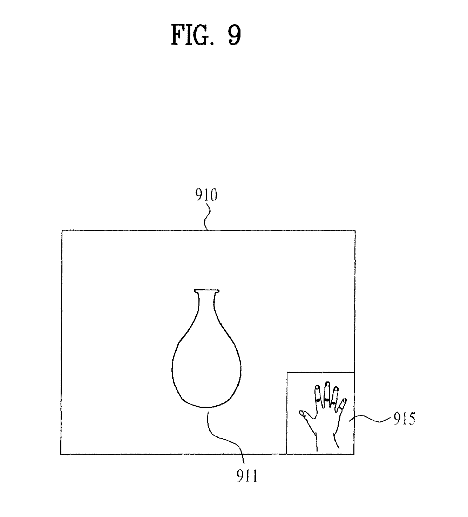

FIGS. 8a to 8e are diagrams illustrating screens displaying information on the detected object and the recognized gesture. FIG. 9 is a diagram illustrating a screen displaying a gesture requesting to display information on the detected object.

In reference to FIGS. 8a to 9, object information 813 on an object 811 detected on a screen 810 is located in an area in which a shape of the detected object 811 is located. When a gesture 815 is recognized on the displayed screen, the screen 810 is transited into a screen 820. The recognized gesture 815 may be displayed on the screen or it may disappear from the screen when a command related to the gesture 815 is performed. According to an embodiment, the recognized gesture 815 may not be displayed on the screen.

The object information 813 on the screen is moved according to a direction instructed by a human finger, to be displayed in a area 823. When a gesture 825 is recognized on the displayed screen 820, the screen 820 is transited into a screen 830.

Object information 823 on the screen 830 is moved according to a direction instructed by a human finger of the gesture 825, to be displayed in a area 833. When a gesture 835 is recognized on the displayed screen 830, the screen 830 is transited into a screen 840.

Object information 833 on the screen 840 is moved according to a direction instructed by a human finger of the gesture 835, to be displayed on a area 843. When a gesture 845 is recognized on the displayed screen 840, the screen 840 is transited into a screen 850.

Object information 843 on the screen 850 is moved according to a direction instructed by a human finger of the gesture 845, to be displayed on a predetermined area 853. When a gesture 855 is recognized on the displayed screen 850, the screen 850 is transited into a screen 910.

Object information 853 is not displayed on the screen 910 according to a display stopping command which is a command related to the gesture 855. When a gesture 915 is recognized on the displayed screen 910, the object information 853 may be displayed on the screen 910. At this time, the object information may be displayed on the area 853 of the former screen 850 or in an area designated as default.

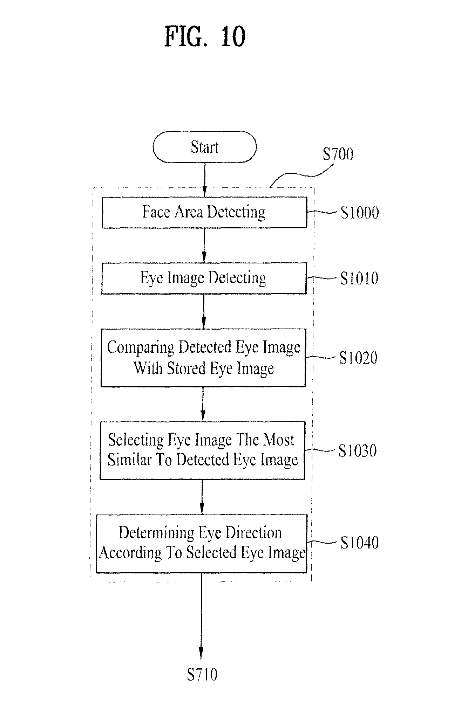

FIG. 10 is a flowchart illustrating process steps of a method for recognizing an eye direction according to an exemplary embodiment of the present invention.

In reference to FIG. 10, the eye direction recognizer 610 detects a face area from the image imaged by the photographing device 92 (S1000).

The eye direction recognizer 610 detects an eye image from the detected face area (S1010).

The eye direction recognizer 610 compares the detected eye image with stored eye images (S1020). Here, the eye direction recognizer 610 computes a difference between each of the stored eye images and the detected eye image based on the result of the comparison.

The eye direction recognizer 610 selects one of the stored eye images which is the most similar to the detected eye image based on the result of the comparison (S1030). Here, the eye direction recognizer 610 may select an eye image having the smallest difference with the detected eye image, out of the stored eye images.

The eye direction recognizer 610 determines an eye direction according to the selected eye image (S1040). Here, the eye direction recognizer 610 may read eye direction information mapped onto the selected eye image and it may determine an eye direction indicated by the read eye direction information to be an eye direction of the detected eye image.

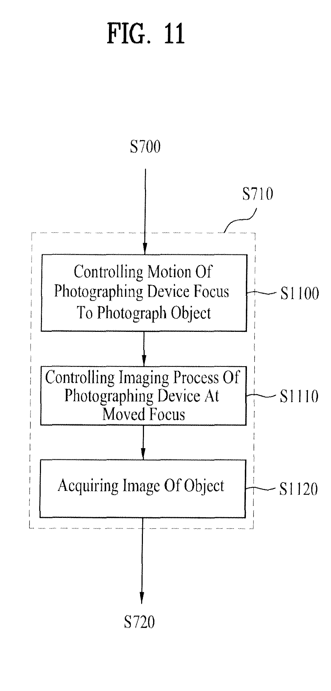

FIG. 11 is a flowchart illustrating process steps of a method for detecting an object according to an exemplary embodiment of the present invention.

In reference to FI. 11, the object detector 630 controls a focus of the photographing device 94 to move such that the photographing device may image an object. Here, the photographing device 94 may be configured of a plurality of cameras and the object detector 630 may control the motion of each camera.

The object detector 630 controls the photographing device 94 to perform imaging at a moved focus (S1110).

The object detector 630 controls to receive from the photographing device the image imaged by the photographing device 94 (S1120). The object detector 630 may extract an object image from an image frame outputted from the photographing device 94. In addition, the object detector 630 may compute a position of the object according to the image frame imaged by the photographing device 94.

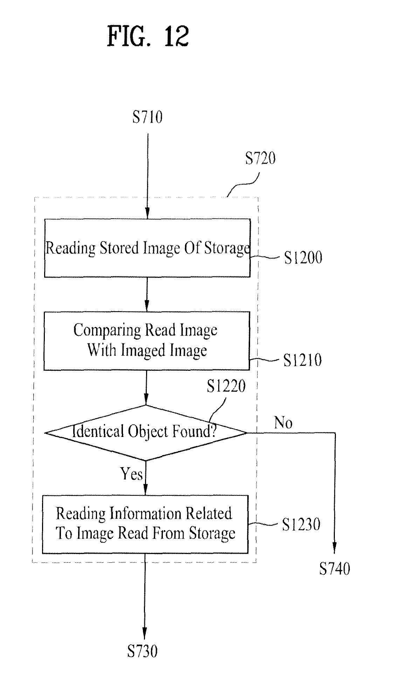

FIG. 12 is a flowchart illustrating process steps of a method for acquiring object information according to an exemplary embodiment of the present invention.

In reference to FIG. 12, the central processor 620 reads images stored in the storage 180 (S1200). Here the stored image may be images of objects near the transparent display device 100 in advance.

The central processor 620 compares the read images with the imaged image (S1210). Here, if an outline of the object included in the read image has an identical pattern to an outline of the object included in the imaged image, the object including in the read images and the object included in the photographed image may be recognized to be identical. In other words, if the outlines are matched when patterns of the outlines are controlled to have the same size, the object included in the read image may be recognized to be identical to the object included in the photographed image.

The central processor 620 identifies whether the identical objects are found (S1220).

When the identical objects are found, the central processor 620 reads information related to the image found in the storage 180 (S1230). Here, the read information may be used as information on the object included in the photographed image and the read information may be prestored object information of an object near the transparent display device 100.

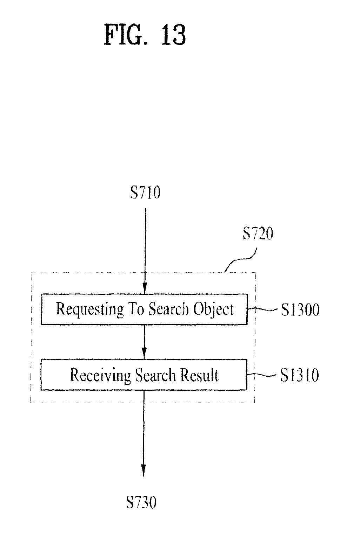

FIG. 13 is a flowchart illustrating process steps of a method for acquiring object information according to another embodiment.

In reference to FIG. 13, the central processor 620 requests a server to search information on an object (S1300). Here, the server may be the object information providing server 10. In addition, the central processor 620 may transmit a search requesting signal to the object information providing server 10. The search requesting signal may include an object image and it may include object location information.

The central processor 620 controls the receiving of the search result from the server (S1310).

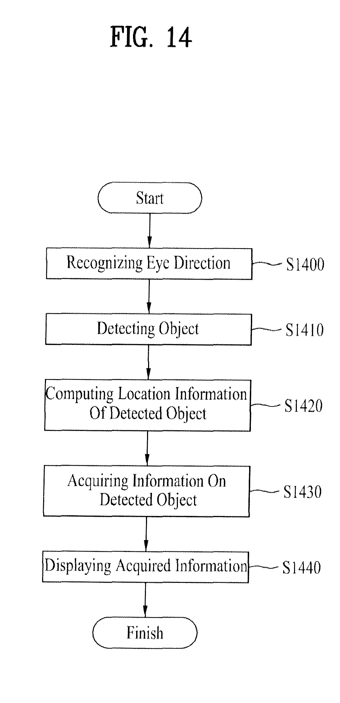

FIG. 14 is a flowchart illustrating process steps of a method for providing object information according to another embodiment.

In reference to FIG. 14, the eye direction recognizer 610 recognizes an eye direction of a person toward the transparent display 150 (S1400).

The object detector 630 detects an object seen via the transparent display 150 in the eye direction recognized by the eye direction recognizer 610 (S1410).

The central processor 620 computes location information of the detected object (S1420). Here, the central processor 620 may acquire the location information of the detected object from the location application server 20 or from its location information. The central processor 620 may position the location of the transparent display device 100 via an electromagnetic wave received from the base station 40 by using network-based technology such as Cell ID, AOA, TDOA and the like. The central processor 620 may position its location via a signal received from a satellite 30 by using Handset-based positioning technology such as TOA (Time Of Arrivals) system, GPS (Global Positioning System) and Hybrid positioning system. Alternatively, the central processor 620 may position the location of the detected object with respect to the transparent display device 100 by using image recognition-based technology or ultrasonic wave-based technology.

The central processor 620 may control the acquirement of information on the detected object (S1430). Here, the central processor 620 may control the acquirement of the object information based on the process of FIG. 12 or the process of FIG. 13.

The transparent display 150 displays the acquired object information (S1440).

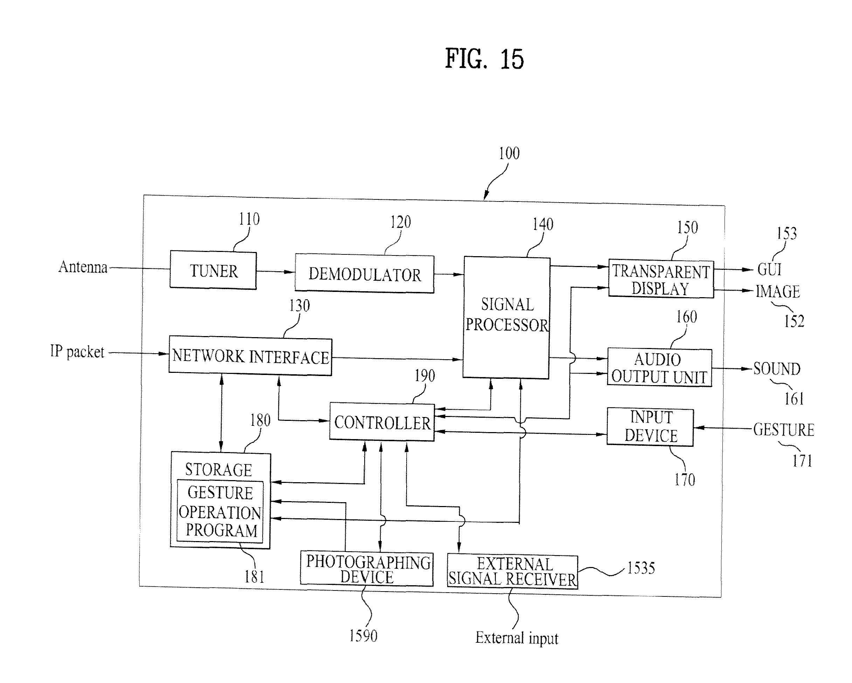

FIG. 15 is a block view illustrating a configuration of a transparent display device according to another embodiment of the present invention.

A transparent display device 100 of FIG. 15 includes a tuner 110, a demodulator 120, a network interface 130, a signal processor 140, a transparent display 150, an audio output unit 160, an input device 170, a storage 180, a controller 190, an external signal receiver 1535 and a photographing device 1590. The controller 190 controls the motion, focus, zoom-in and zoom-out and imaging of the photographing device 1590. The photographing device 1590 images a rear object seen via the transparent display 150 and a person located adjacent to the transparent display 150 according to the control of the controller. The photographing device 1590 may include a plurality of cameras.

The transparent display device 100 of FIG. 15 includes the photographing device 1590, different from the transparent display device 100 of FIG. 5. The other elements of the transparent display device 100 of FIG. 15 are corresponding to those of the transparent display of FIG. 5, respectively, and detailed description of the other elements will be omitted.

The present invention may be embodied as code readable by a computer in a recording medium readable by a computer. The recording medium includes all kinds of recording devices capable of store data readable by a computer device. For example, the recording medium readable by the computer may be a ROM, RAM, CD-ROM, magnetic tape, floppy disk, optical data storing device, and it may be embodied as a carrier wave type (for example, transmission via internet). The recording medium readable by the computer may be distributed in a computer unit connected via a network and a code readable by the computer in distribution may be stored in the recording medium to be implemented.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for providing object information, comprising:
determining an eye direction of a person toward a first region of a transparent display;
selecting at least one object seen via the transparent display in the determined eye direction;
acquiring information on the selected object; and
displaying the acquired information on the transparent display.

2. The method of claim 1, further comprising:
identifying whether the eye direction is changed; and
selecting at least one particular object seen in a second region of the transparent display in the changed eye direction.

3. The method of claim 1, wherein the determining the eye direction comprises:
receiving images imaged by a photographing device, the images including a face area;
determining an eye image from the face area;
comparing the determined eye image with eye images stored in a storage;
selecting a specific eye image among the stored eye images based on the comparison result;
and
determining the eye direction according to the selected specific eye image.

4. The method of claim 1, wherein the acquiring the information comprises:
searching an object associated with the selected object from a storage;
comparing the selected object with a searched object based on the search result; and
reading and acquiring information of the searched object based on the comparison result, the information of the searched object corresponding to the information on the selected object.

5. The method of claim 1, wherein the acquiring the information comprises:
transmitting to a server a request for searching the information on the selected object, the request including at least one of an image or location information of the selected object; and
receiving a search result from the server in response to the request.

6. The method of claim 1, further comprising:
receiving an information moving command to move the displayed information of the selected object to a specific region of the transparent display; and
moving the displayed information to the specific region in response to the information moving command.

7. The method of claim 1, wherein the object includes at least one of a person, animal, thing, vehicle, building or natural object.

8. The method of claim 1, wherein the information on the selected object includes at least one of object title, object kind information, object history information, object appearance information, object weight information, location information of the object or a detailed explanation of the object.

9. The method of claim 1, wherein the acquired information is displayed near an area of the selected object on the transparent display.

10. The method of claim 1, wherein the displayed information is moved according to a recognized gesture.

11. The method of claim 1, wherein the selecting the at least one object comprises:
determining whether the object is located in the first region;
receiving an image of the first region including the determined object imaged by a photographing device; and
selecting the determined object from the received image.

12. A transparent display device, comprising:
a transparent display; and
a controller configured to determine an eye direction of a person toward a first region of the transparent display, to select at least one object seen via the transparent display in the determined eye direction, to acquire information on the selected object, and control the transparent display to display the acquired information.

13. The transparent display device of claim 12, wherein the controller identifies whether the eye direction is changed and selects at least one particular object seen in a second region of the transparent display in the changed eye direction.

14. The transparent display device of claim 12, wherein the controller receives images imaged by a photographing device, the images including a face area, and the controller further determines an eye image from the face area, compares the determined eye image with eye images stored in a storage, selects a specific eye image among the stored eye images based on the comparison result, and determines the eye direction according to the selected specific eye image.

15. The transparent display device of claim 12, wherein the controller searches an object associated with the selected object from a storage, compares the selected object with a searched object based on the searched result, and reads and acquires information of the searched object based on the comparison result, and
wherein the information of the searched object corresponds to the information on the selected object.
